# EUROPEAN PATENT APPLICATION

(11) **EP 4 106 148 A1**
(43) Date of publication of application: **21.12.2022**
(21) Application number: 22179585.9
(22) Date of filing: 17.06.2022
(51) Int. Cl.: H02J 50/70, B60L 53/12, H02J 50/90, H02J 7/02

(54) **POSITION INFORMATION TRANSMISSION DEVICE, POSITION INFORMATION TRANSMISSION METHOD, AND MOVING OBJECT**

(30) Priority: 17.06.2021 JP 2021101167
(71) Applicant: TOYOTA JIDOSHA KABUSHIKI KAISHA, Toyota-shi, Aichi-ken, 471-8571 (JP)
(72) Inventor: MATSUDA, Kazuhisa, Toyota-shi, 471-8571 (JP); OKAZAKI, Shuntaro, Toyota-shi, 471-8571 (JP); YOKOYAMA, Daiki, Toyota-shi, 471-8571 (JP)
(74) Representative: D Young & Co LLP

(57) **Abstract**

The position information transmission device (6, 6') is provided at one of a ground side apparatus (2) and a moving object (3) performing non-contact power transmission by magnetic field resonance coupling with the ground side apparatus, and includes an alternating current power generation circuit (61) for generating alternating current power, an alternating current magnetic field generation circuit (62) for generating an alternating current magnetic field as a position signal when the alternating current power is applied; and a power inflow suppression part (65, 66) for keeping induced electromotive force due to an alternating current magnetic field generated from a power transmission side resonance circuit (43) for the non-contact power transmission from flowing to the alternating current power generation circuit.

## Description

### FIELD

The present invention relates to a position information transmission device, a position information transmission method, and a moving object.

### BACKGROUND

Known in the past has been the art of using a transmission method such as magnetic field coupling (electromagnetic induction), electric field coupling, magnetic field resonance coupling (magnetic field resonance), and electric field resonance coupling (electric field resonance) to transfer power between a ground side apparatus provided on a ground surface and a moving object such as a vehicle by non-contact. In particular, in magnetic field resonance coupling type non-contact power transmission using a power transmission side resonance circuit and a power reception side resonance circuit having the same resonance frequency, it becomes possible to transfer large power through an alternating current magnetic field generated in the power transmission side resonance circuit even in a state where the moving object and ground side apparatus are separated.

However, constantly generating an alternating current magnetic field for transfer of power between the ground side apparatus and moving object wastes power. Further, there is also a concern over the effect of an alternating current magnetic field on electronic equipment etc. For this reason, it is desirable to generate an alternating current magnetic field for transfer of power at a suitable timing when the moving object passes over the ground side apparatus.

In relation to this, PTL 1 describes that a power supply apparatus buried in a road transmits power to a vehicle by non-contact when the vehicle passes over the road, in response to a request for supply of power wirelessly transmitted from the vehicle.

### [CITATIONS LIST]

### [PATENT LITERATURE]

[PTL 1] Japanese Unexamined Patent Publication No. 2018-157686

### SUMMARY

### [TECHNICAL PROBLEM]

However, if the approach of a vehicle to a ground side apparatus is detected by wireless communication, wireless communication is liable to be hindered by an obstacle etc. and an alternating current magnetic field is liable to become unable to be generated at a suitable timing. Further, when a moving object such as a vehicle passes over a ground side apparatus, if positional deviation occurs between the power transmission side resonance circuit and the power reception side resonance circuit, the efficiency of the transfer of power will fall.

Therefore, the inventors of the present invention discovered as a result of intensive study to use an alternating current magnetic field as a position signal for detecting the relative positional relationship of the ground side apparatus and the moving object. However, an alternating current magnetic field for power transfer is liable to leak to the circuit for generating an alternating current magnetic field for position detection and the induced electromotive force generated by the leaked magnetic field is liable to obstruct transmission of the position signal.

In view of the above problem, an object of the present invention is to decrease the effect of the alternating current magnetic field for power transfer on the transmission of the position signal when transferring power by non-contact by magnetic field resonance coupling between a moving object and ground side apparatus.

### [SOLUTION TO PROBLEM]

The summary of the present invention is as follows.
(1) A position information transmission device provided at one of a ground side apparatus and a moving object performing non-contact power transmission by magnetic field resonance coupling with the ground side apparatus, comprising an alternating current power generation circuit for generating alternating current power; an alternating current magnetic field generation circuit for generating an alternating current magnetic field as a position signal when the alternating current power is applied; and a power inflow suppression part for keeping induced electromotive force due to an alternating current magnetic field generated from a power transmission side resonance circuit for the non-contact power transmission from flowing to the alternating current power generation circuit.
(2) The position information transmission device described in above (1), wherein the power inflow suppression part is a filter circuit passing the alternating current power and attenuating the induced electromotive force.
(3) The position information transmission device described in above (1) or (2), wherein the power inflow suppression part is a magnetic shield member blocking the alternating current magnetic field generated from the power transmission side resonance circuit.
(4) The position information transmission device described in any one of above (1) to (3), wherein the alternating current magnetic field generation circuit is provided at one of the ground side apparatus and the moving object, and the power transmission side resonance circuit is provided at the other of the ground side apparatus and the moving object.
(5) A position information transmission method applied to a non-contact power supply system for performing non-contact power transmission by magnetic field resonance coupling between a ground side apparatus and a moving object, including: generating alternating current power by an alternating current power generation circuit; generating an alternating current magnetic field as a position signal by an alternating current magnetic field generation circuit when the alternating current power is applied; and keeping induced electromotive force due to an alternating current magnetic field generated from a power transmission side resonance circuit for the non-contact power transmission from flowing to the alternating current power generation circuit.
(6) A moving object configured so that power is transferred from a ground side apparatus by non-contact, comprising: a power reception side resonance circuit for receiving power transmitted from a power transmission side resonance circuit provided at the ground side apparatus; an alternating current power generation circuit for generating alternating current power; an alternating current magnetic field generation circuit for generating an alternating current magnetic field as a position signal when the alternating current power is applied; and a power inflow suppression part for keeping induced electromotive force due to an alternating current magnetic field generated from the power transmission side resonance circuit from flowing to the alternating current power generation circuit.

### Advantageous Effects of Invention

According to the present invention, it is possible to decrease the effect of the alternating current magnetic field for power transfer on the transmission of the position signal when transferring power by non-contact by magnetic field resonance coupling between a moving object and ground side apparatus.

### BRIEF DESCRIPTION OF DRAWINGS

FIG. 1 is a view schematically showing the configuration of a non-contact power supply system according to a first embodiment of the present invention.
FIG. 2 is a schematic view of the configuration of a controller of a ground side apparatus.
FIG. 3 is a schematic view of the configuration of an ECU of a vehicle.
FIG. 4 is a view schematically showing the configuration of a non-contact power supply system according to a second embodiment of the present invention.
FIG. 5 is a view showing one example of a filter circuit provided at a position information transmission device.
FIG. 6 is a view schematically showing the configuration of a non-contact power supply system according to a third embodiment of the present invention.

### DESCRIPTION OF EMBODIMENTS

Below, referring to the drawings, embodiments of the present invention will be explained in detail. Note that, in the following explanation, similar component elements will be assigned the same reference notations.

### <First Embodiment

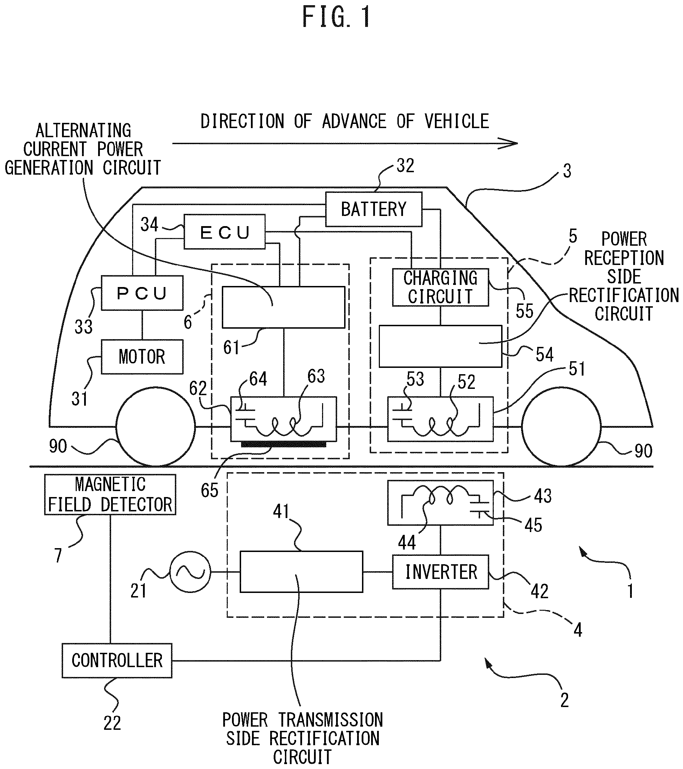

Below, referring to FIG. 1 to FIG. 3, a first embodiment of the present invention will be explained.

FIG. 1 is a view schematically showing a configuration of a non-contact power supply system 1 according to the first embodiment of the present invention. The non-contact power supply system 1 performs non-contact power transmission by magnetic field resonance coupling (magnetic field resonance) between the ground side apparatus 2 and vehicle 3. In particular, in the present embodiment, when the vehicle 3 is running, the non-contact power supply system 1 performs non-contact power transmission between the ground side apparatus 2 and the vehicle 3. The vehicle 3 is one example of a moving object. Note that, non-contact power transmission is also called non-contact power supply, wireless power transmission, or wireless power supply.

The non-contact power supply system 1 is provided with a power transmission apparatus 4 configured to transmit power by non-contact and a power reception apparatus 5 configured to receive power from the power transmission apparatus 4 by non-contact. In the present embodiment, the power transmission apparatus 4 is mounted in the ground side apparatus 2, while the power reception apparatus 5 is mounted in the vehicle 3. That is, the ground side apparatus 2 supplies power to the vehicle 3, and the non-contact power supply system 1 transmits power by non-contact from the ground side apparatus 2 to the vehicle 3.

As shown in FIG. 1, the ground side apparatus 2 is provided with, in addition to the power transmission apparatus 4, a power supply 21 and a controller 22. The ground side apparatus 2 is provided at a road over which the vehicle 3 will pass, for example, is buried in the ground (under the road surface). Note that, at least a part of the ground side apparatus 2 (for example, the power supply 21 and the controller 22) may be arranged on the road surface.

The power supply 21 is the power source of the power transmission apparatus 4 and supplies power to the power transmission apparatus 4. The power supply 21, for example, is a commercial alternating current power supply supplying single-phase alternating current power. Note that, the power supply 21 may be an alternating current power supply supplying three-phase alternating current power etc.

The power transmission apparatus 4 is provided with a power transmission side rectification circuit 41, an inverter 42, and a power transmission side resonance circuit 43. In the power transmission apparatus 4, alternating current power (high frequency power) for generating an alternating current magnetic field is supplied through the power transmission side rectification circuit 41 and the inverter 42 to the power transmission side resonance circuit 43.

The power transmission side rectification circuit 41 is electrically connected to the power supply 21 and the inverter 42. The power transmission side rectification circuit 41 rectifies the alternating current power supplied from the power supply 21 to convert it to direct current power and supplies the direct current power to the inverter 42. The power transmission side rectification circuit 41 is, for example, an AC/DC converter.

The inverter 42 is electrically connected to the power transmission side rectification circuit 41 and power transmission side resonance circuit 43. The inverter 42 converts the direct current power supplied from the power transmission side rectification circuit 41 to alternating current power of a frequency higher than the alternating current power of the power supply 21 (high frequency power) and supplies the high frequency power to the power transmission side resonance circuit 43.

The power transmission side resonance circuit 43 has a resonator comprised of a coil 44 and a capacitor 45. The various parameters of the coil 44 and capacitor 45 (outside diameter and inside diameter of the coil 44, turns of the coil 44, electrostatic capacity of the capacitor 45, etc.) are determined so that the resonance frequency of the power transmission side resonance circuit 43 becomes a predetermined set value. The predetermined set value is, for example, 10 kHz to 100 GHz, preferably is the 85 kHz determined by the SAE TIR J2954 standard as the frequency band for non-contact power supply of vehicles.

The power transmission side resonance circuit 43 is arranged at the center of the lane over which the vehicle 3 passes so that the center of the coil 44 is positioned at the center of the lane. If high frequency power supplied from the inverter 42 is applied to the power transmission side resonance circuit 43, the power transmission side resonance circuit 43 generates an alternating current magnetic field for transmitting the power. Note that, the power supply 21 may be a fuel cell or solar cell or other such direct current power supply. In this case, the power transmission side rectification circuit 41 may be omitted.

The controller 22 is, for example, a general use computer and performs various control of the ground side apparatus 2. For example, the controller 22 is electrically connected to the inverter 42 of the power transmission apparatus 4 and controls the inverter 42 so as to control the power transmission by the power transmission apparatus 4.

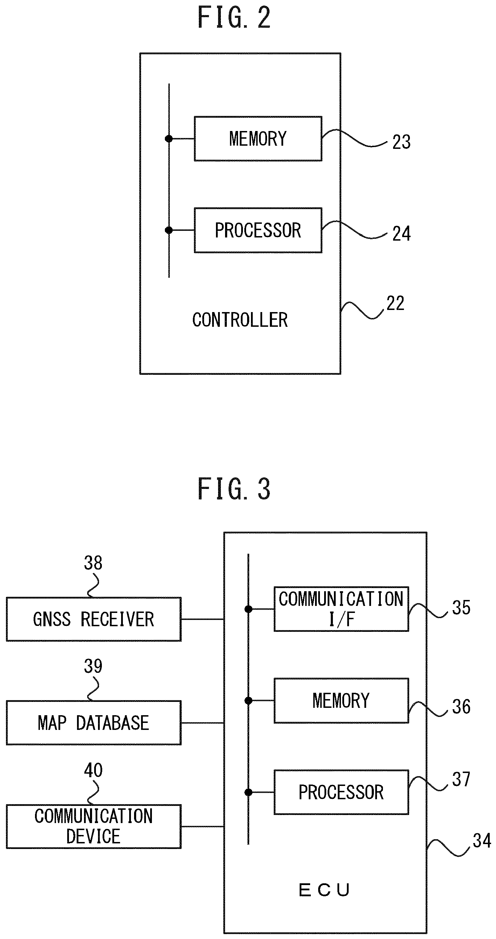

FIG. 2 is a schematic view of the configuration of the controller 22. The controller 22 is provided with a memory 23 and a processor 24. The memory 23 and the processor 24 are connected with each other through signal wires. Note that, the controller 22 may be further provided with a communication interface etc. for enabling communication between the ground side apparatus 2 and the outside of the ground side apparatus 2.

The memory 23 has, for example, a volatile semiconductor memory (for example, a RAM) and a nonvolatile semiconductor memory (for example, a ROM). The memory 23 stores programs to be run at the processor 24 and various data used when various processing is performed by the processor 24.

The processor 24 has one or more CPUs (central processing units) and their peripheral circuits and performs various processing. Note that, the processor 24 may have a logic unit or arithmetic unit or other such processing circuit.

On the other hand, the vehicle 3, as shown in FIG. 1, is provided with, in addition to the power reception apparatus 5, a motor 31, a battery 32, a power control unit (PCU) 33, and an electronic control unit (ECU) 34. In the present embodiment, the vehicle 3 is an electric vehicle (EV) not mounting an internal combustion engine. The motor 31 outputs drive power for running use.

The motor 31 is, for example, an alternating current synchronous motor and functions as a motor and a generator. When the motor 31 functions as a motor, the power stored in the battery 32 is used as the source of power for driving it. The output of the motor 31 is transmitted through a decelerator and axle to the wheels 90. On the other hand, at the time of deceleration of the vehicle 3, the motor 31 is driven by rotation of the wheels 90 and the motor 31 functions as a generator to produce regenerated power.

The battery 32 is a rechargeable secondary battery and is, for example, comprised of a lithium ion battery, nickel-hydrogen battery, etc. The battery 32 stores the power required for the vehicle 3 to run (for example, drive power of motor 31). If the regenerated power produced by the motor 31 is supplied to the battery 32, the battery 32 is charged and the state of charge (SOC) of the battery 32 is restored. Further, the battery 32 can be charged by an outside power supply other than the ground side apparatus 2 through a charging port provided at the vehicle 3.

The PCU 33 is electrically connected to the battery 32 and the motor 31. The PCU 33 has an inverter, a booster converter, and a DC/DC converter. The inverter converts the direct current power supplied from the battery 32 to alternating current power and supplies the alternating current power to the motor 31. On the other hand, the inverter converts the alternating current power generated by the motor 31 (regenerated power) to direct current power and supplies the direct current power to the battery 32. When the power stored in the battery 32 is supplied to the motor 31, the booster converter boosts the voltage of the battery 32 in accordance with need. When the power stored in the battery 32 is supplied to the headlights and other electronic equipment, the DC/DC converter lowers the voltage of the battery 32.

The power reception apparatus 5 is provided with a power reception side resonance circuit 51, a power reception side rectification circuit 54, and a charging circuit 55. The power reception apparatus 5 receives power from the power transmission apparatus 4 and supplies the received power to the battery 32.

The power reception side resonance circuit 51 is arranged at the floor part of the vehicle 3 so that the distance from the road surface becomes smaller. In the present embodiment, the power reception side resonance circuit 51 is arranged at the center of the vehicle 3 in the vehicle width direction and is arranged between the front wheels 90 and the rear wheels 90 in the front-back direction of the vehicle 3.

The power reception side resonance circuit 51 has a configuration similar to the power transmission side resonance circuit 43 and has a resonator comprised of a coil 52 and a capacitor 53. The various parameters of the coil 52 and the capacitor 53 (outside diameter and inside diameter of the coil 52, turns of the coil 52, electrostatic capacity of the capacitor 53, etc.) are determined so that the resonance frequency of the power reception side resonance circuit 51 matches the resonance frequency of the power transmission side resonance circuit 43. Note that, as long as the amount of deviation of the resonance frequency of the power reception side resonance circuit 51 and the resonance frequency of the power transmission side resonance circuit 43 is small, for example, the resonance frequency of the power reception side resonance circuit 51 is within a range of ±20% of the resonance frequency of the power transmission side resonance circuit 43, the resonance frequency of the power reception side resonance circuit 51 does not necessarily have to match the resonance frequency of the power transmission side resonance circuit 43.

As shown in FIG. 1, when the power reception side resonance circuit 51 faces the power transmission side resonance circuit 43, if an alternating current magnetic field is generated at the power transmission side resonance circuit 43, the vibration of the alternating current magnetic field is transferred to the power reception side resonance circuit 51 which resonates by the same resonance frequency as the power transmission side resonance circuit 43. As a result, due to electromagnetic induction, an induction current flows to the power reception side resonance circuit 51. Due to the induction current, power is generated at the power reception side resonance circuit 51. The induced electromotive force generated at the power reception side resonance circuit 51 is recovered at the battery 32 through the power reception side rectification circuit 54 and the charging circuit 55. That is, the power transmission side resonance circuit 43 transmits power to the power reception side resonance circuit 51, and the power reception side resonance circuit 51 receives power from the power transmission side resonance circuit 43.

The power reception side rectification circuit 54 is electrically connected to the power reception side resonance circuit 51 and the charging circuit 55. The power reception side rectification circuit 54 rectifies the alternating current power supplied from the power reception side resonance circuit 51 to convert it to direct current power and supplies the direct current power to the charging circuit 55. The power reception side rectification circuit 54 is, for example, an AC/DC converter.

The charging circuit 55 is electrically connected to the power reception side rectification circuit 54 and the battery 32. The charging circuit 55 converts the direct current power supplied from the power reception side rectification circuit 54 to the voltage level of the battery 32 and supplies it to the battery 32. If the power transmitted from the power transmission apparatus 4 is supplied by the power reception apparatus 5 to the battery 32, the battery 32 is charged and the SOC of the battery 32 is restored. The charging circuit 55 is, for example, a DC/DC converter.

The ECU 34 performs various control of the vehicle 3. For example, the ECU 34 is electrically connected to the charging circuit 55 of the power reception apparatus 5 and controls the charging circuit 55 so as to control the charging of the battery 32 by power transmitted from the power transmission apparatus 4. Further, the ECU 34 is electrically connected to the PCU 33 and controls the PCU 33 to control the transfer of power between the battery 32 and motor 31.

FIG. 3 is a schematic view of the configuration of the ECU 34. The ECU 34 has a communication interface 35, a memory 36, and a processor 37. The communication interface 35, the memory 36, and the processor 37 are connected together through signal wires.

The communication interface 35 has an interface circuit for connecting the ECU 34 to an internal vehicle network based on the CAN (Controller Area Network) or other standard.

The memory 36, for example, has a volatile semiconductor memory (for example, RAM) and nonvolatile semiconductor memory (for example, ROM). The memory 36 stores programs to be run at the processor 37, various data used when various processing is performed by the processor 37, etc.

The processor 37 has one or more CPUs (central processing units) and their peripheral circuits and performs various processing. Note that, the processor 37 may have a logic unit or arithmetic unit or other such processing circuit.

Further, as shown in FIG. 3, the vehicle 3 is further provided with a GNSS receiver 38, a map database 39, and a communication device 40. The GNSS receiver 38, the map database 39, and the communication device 40 are electrically connected to the ECU 34.

The GNSS receiver 38 detects the current position of the vehicle 3 (for example, a latitude and longitude of the vehicle 3) based on position measurement information obtained from a plurality of (for example, three or more) positioning satellites. Specifically, the GNSS receiver 38 captures a plurality of positioning satellites and receives signals emitted from the positioning satellites. Further, the GNSS receiver 38 calculates the distances to the positioning satellites based on the difference between the times of emission and times of reception of the signals and detects the current position of the vehicle 3 based on the distances to the positioning satellites and the positions of the positioning satellites (orbital information). The output of the GNSS receiver 38, that is, the current position of the vehicle 3 detected by the GNSS receiver 38, is sent to the ECU 34.

Note that, "GNSS" (Global Navigation Satellite System) is a general name of the GPS of the U.S., GLONASS of Russia, Galileo of Europe, QZSS of Japan, BeiDou of China, IRNSS of India, and other positioning satellite positioning systems. Therefore, the GNSS receiver 38 includes a GPS receiver.

The map database 39 stores map information. The map information includes position information of the ground side apparatuses 2. The ECU 34 acquires map information from the map database 39. Note that, the map database 39 may be provided outside of the vehicle 3 (for example, the server etc.), and the ECU 34 may acquire map information from outside the vehicle 3.

The communication device 40 is equipment enabling communication between the vehicle 3 and the outside of the vehicle 3 (for example, road-vehicle communicator, data communication module (DCM), etc.) The ECU 34 communicates with the outside of the vehicle 3 through the communication device 40.

In the above way, the non-contact power supply system 1 transfers power from the ground side apparatus 2 to the vehicle 3 through the alternating current magnetic field generated at the power transmission side resonance circuit 43 of the power transmission apparatus 4. However, constantly generating an alternating current magnetic field for transfer of power between the ground side apparatus 2 and vehicle 3 wastes power. Further, there is also a concern over the effect of an alternating current magnetic field on electronic equipment etc.

For this reason, it is desirable to generate an alternating current magnetic field for transfer of power at a suitable timing when the vehicle 3 passes over the ground side apparatus 2. However, if the approach of the vehicle 3 to a ground side apparatus 2 is detected by wireless communication, wireless communication is liable to be hindered by an obstacle etc. and an alternating current magnetic field is liable to become unable to be generated at a suitable timing. Further, when a vehicle 3 passes over the ground side apparatus 2, if positional deviation occurs between the power transmission side resonance circuit 43 and the power reception side resonance circuit 51, the efficiency of the transfer of power falls.

Therefore, in the present embodiment, the non-contact power supply system 1 is provided with a position information transmission device 6 and a magnetic field detector 7. The position information transmission device 6 and the magnetic field detector 7 are used to detect the relative positional relationship of the power transmission side resonance circuit 43 of the power transmission apparatus 4 and the power reception side resonance circuit 51 of the power reception apparatus 5. In the present embodiment, as shown in FIG. 1, the position information transmission device 6 is provided at the vehicle 3, while the magnetic field detector 7 is provided at the ground side apparatus 2.

The position information transmission device 6 is provided with an alternating current power generation circuit 61 and an alternating current magnetic field generation circuit 62. The position information transmission device 6 transmits information relating to the relative positional relationship between the ground side apparatus 2 and the vehicle 3, in the present embodiment, the position information of the vehicle 3, through the alternating current magnetic field.

The alternating current power generation circuit 61 is electrically connected to the battery 32 and the alternating current magnetic field generation circuit 62. The alternating current power generation circuit 61 generates alternating current power and supplies the alternating current power to the alternating current magnetic field generation circuit 62. For example, the alternating current power generation circuit 61 has an oscillation circuit and an amplifier. The oscillation circuit is, for example, configured from an inverter and converts the direct current power supplied from the battery 32 to a predetermined frequency alternating current power. The amplifier amplifies the output power of the oscillation circuit (alternating current power).

As shown in FIG. 1, the alternating current magnetic field generation circuit 62 is arranged at the bottom part of the vehicle 3 so that the distance from the road surface becomes smaller. In the present embodiment, the alternating current magnetic field generation circuit 62 is arranged at the center of the vehicle 3 in the vehicle width direction and is arranged further to the back from the power reception side resonance circuit 51 in the front-back direction of the vehicle 3. Note that, the alternating current magnetic field generation circuit 51 may be arranged at the same position as the power reception side resonance circuit 51 or further to the front than the power reception side resonance circuit 51 in the front-back direction of the vehicle 3.

The alternating current magnetic field generation circuit 62 has a configuration similar to the power transmission side resonance circuit 43 and the power reception side resonance circuit 51 and has a resonator comprised of a coil 63 and a capacitor 64. The various parameters of the coil 63 and the capacitor 64 (outside diameter and inside diameter of coil 63, turns of coil 63, electrostatic capacity of capacitor 64, etc.) are determined so that the resonance frequency of the alternating current magnetic field generation circuit 62 becomes a predetermined set value. The predetermined set value is set to a value different from the resonance frequency of the power transmission side resonance circuit 43 and the power reception side resonance circuit 51, that is, the resonance frequency of magnetic field resonance coupling. Further, the frequency of the alternating current power supplied from the alternating current power generation circuit 61 to the alternating current magnetic field generation circuit 62 is set to the same value as the resonance frequency of the alternating current magnetic field generation circuit 62.

When the alternating current power supplied from the alternating current power generation circuit 61 is applied to the alternating current magnetic field generation circuit 62, the alternating current magnetic field generation circuit 62 generates an alternating current magnetic field for detecting the relative positional relationship between the power transmission side resonance circuit 43 and the power reception side resonance circuit 51 (below, referred to the "alternating current magnetic field for position detection"). That is, the alternating current magnetic field generation circuit 62 generates an alternating current magnetic field as a position signal when an alternating current power is applied.

As shown in FIG. 1, the alternating current power generation circuit 61 is electrically connected to the ECU 34. The ECU 34 controls the alternating current power generation circuit 61. Based on a command from the ECU 34, the alternating current power generation circuit 61 converts the direct current power supplied from the battery 32 to alternating current power and supplies the alternating current power to the alternating current magnetic field generation circuit 62.

For example, when the distance between the installed area of the ground side apparatus 2 and the vehicle 3 becomes equal to or less than a predetermined value, the ECU 34 controls the alternating current power generation circuit 61 to generate an alternating current magnetic field for position detection by the alternating current magnetic field generation circuit 62. The distance between the installed area of the ground side apparatus 2 and the vehicle 3 is, for example, calculated by comparing the current position of the vehicle 3 detected by the GNSS receiver 38 and the position of the installed area of the ground side apparatus 2 stored in the map database 39. Note that, when receiving a predetermined signal through the communication device 40 from a road side device provided at the front of the ground side apparatus 2, the ECU 34 may control the alternating current power generation circuit 61 to generate the alternating current magnetic field for position detection by the alternating current magnetic field generation circuit 62. Further, when the vehicle 3 is running, the ECU 34 may constantly generate a weak alternating current magnetic field by the alternating current magnetic field generation circuit 62.

Further, the PCU 33 may function as an alternating current power generation circuit 61. In this case, the PCU 33 is electrically connected to the alternating current magnetic field generation circuit 62, and the ECU 34 controls the PCU 33 to make the alternating current magnetic field generation circuit 62 generate the alternating current magnetic field for position detection.

The magnetic field detector 7 detects a surrounding magnetic field. The magnetic field detector 7 is, for example, a magneto impedance (MI) sensor. The drive power of the magnetic field detector 7 is, for example, supplied from the power supply 21 etc. through the drive circuit to the magnetic field detector 7. Note that, magnetic field detector 7 may be a Hall sensor, magneto resistive (MR) sensor, etc.

The magnetic field detector 7 is arranged further to the front from the power transmission side resonance circuit 43 of the power transmission apparatus 4 in the direction of advance of the vehicle 3 at the road at which the power transmission apparatus 4 is provided and is arranged at the center of the lane over which the vehicle 3 passes. The magnetic field detector 7 is arranged in the ground (below the road surface) or on the road surface. If an alternating current magnetic field for position detection is generated from a vehicle 3 in the surroundings of the magnetic field detector 7, the magnetic field detector 7 detects the alternating current magnetic field for position detection. Note that, a plurality of magnetic field detectors 7 may be arranged along a direction perpendicular to the direction of advance of the vehicle 3.

The magnetic field detector 7 is electrically connected to the controller 22. The output of the magnetic field detector 7 is transmitted to the controller 22. The controller 22 estimates the relative positional relationship between the power transmission side resonance circuit 43 and the power reception side resonance circuit 51 based on the output of the magnetic field detector 7 and controls the non-contact power transmission between the ground side apparatus 2 and the vehicle 3 based on the estimated positional relationship.

That is, the controller 22 detects the alternating current magnetic field for position detection generated from the alternating current magnetic field generation circuit 62 so as to estimate the relative positional relationship between the power transmission side resonance circuit 43 and the power reception side resonance circuit 51. By using an alternating current magnetic field as the position signal, it is possible to reduce the effect of an obstacle in the transfer of a signal. Further, even in the case where a steady magnetic field (direct current magnetic field) occurs due to metal etc. present in the surroundings of the ground side apparatus 2, it becomes easy to discriminate this steady magnetic field and position signal (alternating current magnetic field).

Further, in the present embodiment, the frequency of the alternating current magnetic field for position detection differs from the resonance frequency of the power transmission side resonance circuit 43 and the power reception side resonance circuit 51. For this reason, discrimination of the alternating current magnetic field generated in the power transmission side resonance circuit 43 for transfer of power and the alternating current magnetic field generated at the alternating current magnetic field generation circuit 62 for detection of position becomes easy. Therefore, by using as the signal for position detection, an alternating current magnetic field of a frequency different from the alternating current magnetic field for power transfer, it is possible to precisely detect the relative positional relationship between the power transmission side resonance circuit 43 and the power reception side resonance circuit 51.

Preferably, the frequency of the alternating current magnetic field for position detection is set to a value lower than the resonance frequency of the power transmission side resonance circuit 43 and the power reception side resonance circuit 51. By doing this, it is possible to more easily generate an alternating current magnetic field for position detection. For example, if the resonance frequency of the power transmission side resonance circuit 43 and the power reception side resonance circuit 51 is 85 kHz, the frequency of the alternating current magnetic field for position detection is set to 50 Hz to 50 kHz, for example, 1 kHz.

Further, in the present embodiment, the power transmission side resonance circuit 43 and the magnetic field detector 7 are provided at the ground side apparatus 2, while the power reception side resonance circuit 51 and the alternating current magnetic field generation circuit 62 are provided at the vehicle 3. That is, the power transmission side resonance circuit 43 and the magnetic field detector 7 are provided at one of the vehicle 3 and the ground side apparatus 2, while the power reception side resonance circuit 51 and the alternating current magnetic field generation circuit 62 are provided at the other of the vehicle 3 and the ground side apparatus 2. In this case, the source of generation of the alternating current magnetic field for power transfer and the source of generation of the alternating current magnetic field for position detection differ, and therefore the change along with time of the strength of the signal detected by the magnetic field detector 7 differs between the alternating current magnetic field for position detection and the alternating current magnetic field for power transfer. As a result, the alternating current magnetic field for position detection and the alternating current magnetic field for power transfer become easier to discriminate and in turn the relative positional relationship between the power transmission side resonance circuit 43 and the power reception side resonance circuit 51 can be more precisely detected.

However, if using an alternating current magnetic field as the position signal, the following such problem different from the case of detection of position by wireless communication can arise. That is, if an alternating current magnetic field is generated from the power transmission side resonance circuit 43 of the power transmission apparatus 4, a leakage magnetic field is generated at the power reception side resonance circuit 51 provided at the vehicle 3 together with the alternating current magnetic field generation circuit 62. As a result, even in the alternating current magnetic field generation circuit 62, an induced electromotive force is generated and this induced electromotive force is liable to obstruct transmission of the position signal by the position information transmission device 6. Specifically, the induced electromotive force generated at the alternating current magnetic field generation circuit 62 flows into the alternating current power generation circuit 61 as overvoltage and as a result the alternating current power generation circuit 61 is liable to become unable to supply a suitable alternating current power to the alternating current magnetic field generation circuit 62.

Therefore, in the present embodiment, the position information transmission device 6 is provided with a power inflow suppression part. The power inflow suppression part keeps the induced electromotive force generated due to the alternating current magnetic field generated from the power transmission side resonance circuit 43 for non-contact power transmission from flowing to the alternating current power generation circuit 61. By doing this, the alternating current magnetic field generated from the power transmission side resonance circuit 43 can reduce the effect on the transmission of the position signal by the position information transmission device 6.

In the present embodiment, the magnetic shield member 65 is used as the power inflow suppression part and the position information transmission device 6 is provided with the magnetic shield member 65. The magnetic shield member 65 is provided at the alternating current magnetic field generation circuit 62 (for example, the bottom part of the alternating current magnetic field generation circuit 62) so as to cover the coil 63 of the alternating current magnetic field generation circuit 62. For example, the magnetic shield member 65 has a sheet shape and is attached to the alternating current magnetic field generation circuit 62 by a tackifier.

The magnetic shield member 65 is configured from a high magnet permeability magnetic material and is configured so as to block the predetermined frequency magnetic field. In the present embodiment, the magnetic shield member 65 blocks an alternating current magnetic field generated from the power transmission side resonance circuit 43, that is, an alternating current magnetic field of a resonance frequency of the power transmission side resonance circuit 43. That is, the magnetic shield member 65 keeps an induced electromotive force from occurring at the alternating current magnetic field generation circuit 62 due to the alternating current magnetic field for power transfer and by doing this keeps induced electromotive force from flowing to the alternating current power generation circuit 61.

Further, in the present embodiment, the alternating current magnetic field generation circuit 62 is provided at the vehicle 3, while the power transmission side resonance circuit 43 is provided at the ground side apparatus 2. That is, the alternating current magnetic field generation circuit 62 is provided at one of the ground side apparatus 2 and the vehicle 3, while the power transmission side resonance circuit 43 is provided at the other of the ground side apparatus 2 and the vehicle 3. In this case, when the ground side apparatus 2 transfers power to the vehicle 3, a leakage magnetic field occurs at the alternating current magnetic field generation circuit 62, while when an alternating current magnetic field is generated from the ground side apparatus 2 due to supply of power to another vehicle, no leakage magnetic field occurs at the alternating current magnetic field generation circuit 62. Therefore, inflow of induced electromotive force due to an alternating current magnetic field for power transfer to the alternating current power generation circuit 61 can be more effectively suppressed.

### <Second Embodiment

The configuration and control of the non-contact power supply system according to a second embodiment are basically similar to the configuration and control of the non-contact power supply system according to the first embodiment except for the points explained below. For this reason, below, the second embodiment of the present invention will be explained centered on the parts different from the first embodiment.

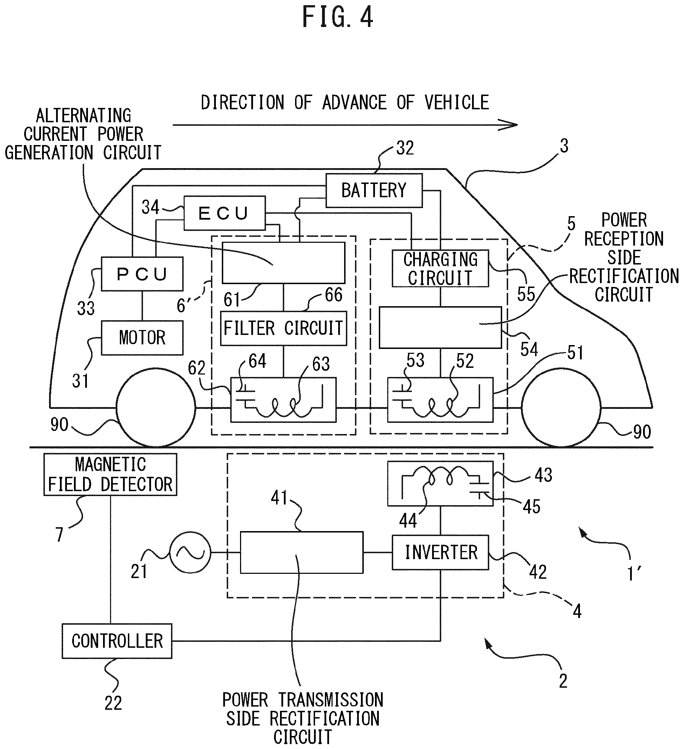

FIG. 4 is a view schematically showing the configuration of a non-contact power supply system 1' according to the second embodiment of the present invention. In the second embodiment, as the power inflow suppression part, a filter circuit 66 is used instead of the magnetic shield member 65 and the position information transmission device 6' is provided with the filter circuit 66. The filter circuit 66 is provided between the alternating current power generation circuit 61 and the alternating current magnetic field generation circuit 62 and is electrically connected to the alternating current power generation circuit 61 and alternating current magnetic field generation circuit 62.

The filter circuit 66 is configured so as to attenuate power of a predetermined frequency. In the present embodiment, the filter circuit 66 passes the alternating current power supplied from the alternating current power generation circuit 61 and attenuates the induced electromotive force due to the alternating current magnetic field generated from the power transmission side resonance circuit 43. That is, when an alternating current magnetic field is generated as a position signal from the alternating current magnetic field generation circuit 62, the filter circuit 66 passes the alternating current power supplied from the alternating current power generation circuit 61 to the alternating current magnetic field generation circuit 62. On the other hand, when an induced electromotive force is generated at the alternating current magnetic field generation circuit 62 through the alternating current magnetic field for power transfer, the filter circuit 66 attenuates the induced electromotive force supplied from the alternating current magnetic field generation circuit 62 to the alternating current power generation circuit 61. Therefore, by using the filter circuit 66, it is possible to keep induced electromotive force from flowing to the alternating current power generation circuit 61 even if an induced electromotive force occurs at the alternating current magnetic field generation circuit 62.

The frequency of the induced electromotive force generated at the alternating current magnetic field generation circuit 62 is equal to the frequency of the alternating current magnetic field for power transfer, that is, the resonance frequency of the power transmission side resonance circuit 43 and the power reception side resonance circuit 51. If the frequency of the induced electromotive force is lower than the frequency of the alternating current power supplied from the alternating current power generation circuit 61, for example, a high pass filter (HPF) is used as the filter circuit 66. On the other hand, if the frequency of the induced electromotive force is higher than the frequency of the alternating current power supplied from the alternating current power generation circuit 61, for example, a low pass filter (LPF) is used as the filter circuit 66. Note that, as the filter circuit 66, a band pass filter (BPF) passing only a signal of a specific frequency including the frequency of the alternating current power and not including the frequency of the induced electromotive force may be used.

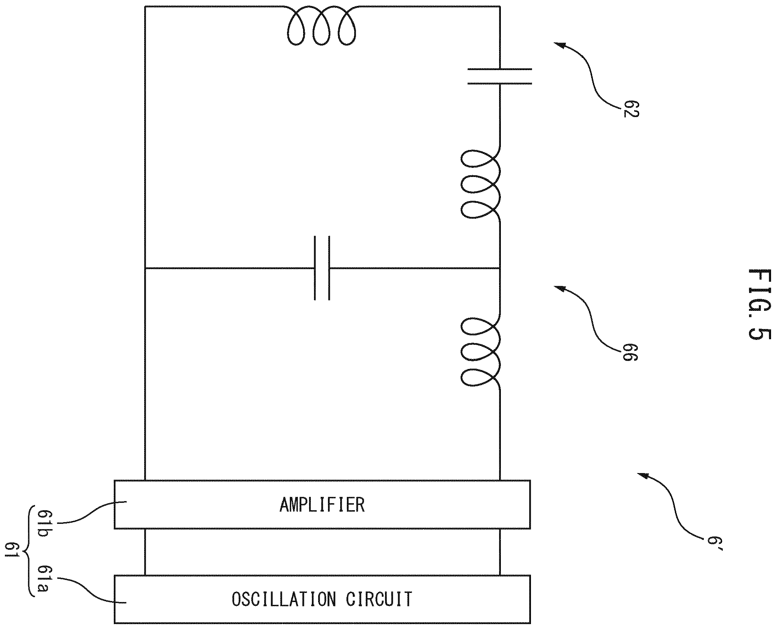

FIG. 5 is a view showing one example of the filter circuit 66 provided at the position information transmission device 6'. The alternating current power generation circuit 61 is comprised of an oscillation circuit 61a and an amplifier 61b. The filter circuit 66 is provided between the amplifier 61b and the alternating current magnetic field generation circuit 62.

In the example of FIG. 5, the filter circuit 66 is an LC filter that combines a coil (inductor) and a capacitor, specifically a T-type low pass filter (LPF). In this case, the frequency of the induced electromotive force generated at the alternating current magnetic field generation circuit 62, that is, the resonance frequency of the power transmission side resonance circuit 43 and the power reception side resonance circuit 51, is, for example, 85 kHz, while the frequency of the alternating current power supplied from the alternating current power generation circuit 61 is 50 Hz to 50 kHz, for example, 1 kHz. The filter circuit 66 passes the alternating current power supplied from the amplifier 61b of the alternating current power generation circuit 61 to the alternating current magnetic field generation circuit 62 and attenuates the induced electromotive force generated at the alternating current magnetic field generation circuit 62.

### <Third Embodiment

The configuration and control of the non-contact power supply system according to a third embodiment are basically similar to the configuration and control of the non-contact power supply system according to the first embodiment except for the points explained below. For this reason, below, the third embodiment of the present invention will be explained centered on the parts different from the first embodiment.

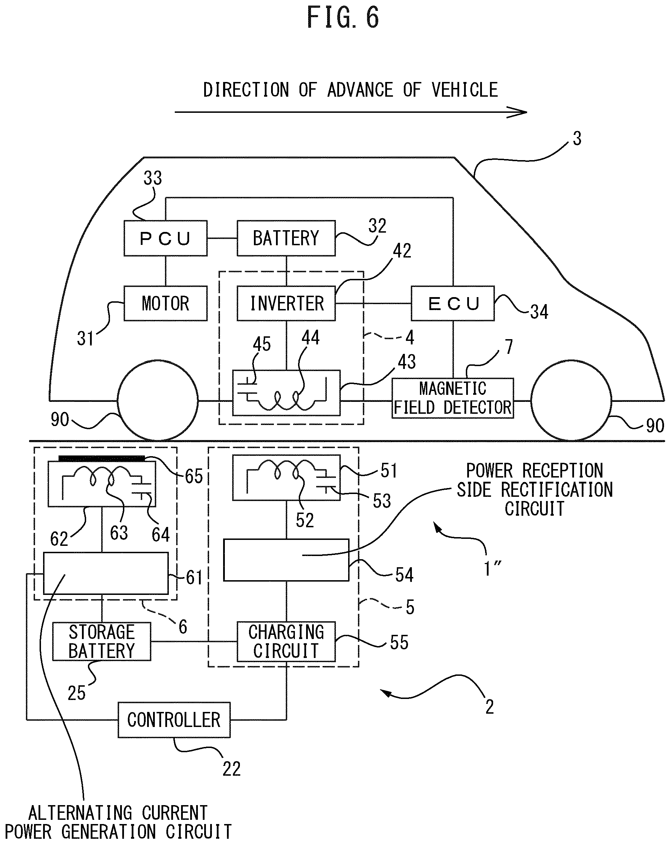

FIG. 6 is a view schematically showing the configuration of a non-contact power supply system 1" according to the third embodiment of the present invention. As explained above, the battery 32 of the vehicle 3 can be charged by the regenerated power generated by the motor 31. However, when the SOC of the battery 32 is high, the regenerated power cannot be supplied to the battery 32. Further, if the SOC of the battery 32 is maintained in a high state, deterioration of the battery 32 is promoted. For this reason, there is a need for reducing the SOC of the battery 32 while the vehicle 3 is running.

Therefore, in the third embodiment, unlike the first embodiment, the power transmission apparatus 4 is mounted in the vehicle 3, while the power reception apparatus 5 is mounted in the ground side apparatus 2. That is, the non-contact power supply system 1" transfers power from the vehicle 3 to the ground side apparatus 2 by non-contact while the vehicle 3 is running.

In the third embodiment, the power transmission apparatus 4 is provided with an inverter 42 and a power transmission side resonance circuit 43. Further, as the power supply of the power transmission apparatus 4, the battery 32 is used. The power of the battery 32 is consumed by the transfer of power from the vehicle 3 to the ground side apparatus 2.

The inverter 42 is electrically connected to the battery 32 and the power transmission side resonance circuit 43. The inverter 42 converts the direct current power supplied from the battery 32 into high frequency power and supplies the high frequency power to the power transmission side resonance circuit 43. If the high frequency power supplied from the inverter 42 is applied to the power transmission side resonance circuit 43, the power transmission side resonance circuit 43 generates an alternating current magnetic field for transfer of power. The ECU 34 is electrically connected to the inverter 42 of the power transmission apparatus 4 and controls the inverter 42 so as to control the transmission of power by the power transmission apparatus 4. Note that, the inverter 42 may be omitted and the PCU 33 may be electrically connected to the power transmission side resonance circuit 43 to function as the inverter of the power transmission apparatus 4.

On the other hand, the power reception apparatus 5, in the same way as the first embodiment, is provided with a power reception side resonance circuit 51, a power reception side rectification circuit 54, and a charging circuit 55. The ground side apparatus 2 is provided with a storage battery 25. Power transmitted from the power transmission apparatus 4 to the power reception apparatus 5 is supplied to the storage battery 25. The storage battery 25 is a rechargeable secondary battery and, for example, is comprised of a lithium ion battery, nickel-hydrogen battery, etc.

As shown in FIG. 6, when the power reception side resonance circuit 51 faces the power transmission side resonance circuit 43, if an alternating current magnetic field is generated by the power transmission side resonance circuit 43, vibration of the alternating current magnetic field is transmitted to the power reception side resonance circuit 51 which resonates by the same resonance frequency as the power transmission side resonance circuit 43. As a result, an induction current flows to the power reception side resonance circuit 51 due to electromagnetic induction and an induced electromotive force is generated at the power reception side resonance circuit 51 by the induction current. The induced electromotive force generated at the power reception side resonance circuit 51 is recovered at the storage battery 25.

The charging circuit 55 is electrically connected to the power reception side rectification circuit 54 and the storage battery 25 and converts the direct current power supplied from the power reception side rectification circuit 54 into the voltage level of the storage battery 25 and supplies it to the storage battery 25. If the power transmitted from the power transmission apparatus 4 is supplied to the storage battery 25 by the power reception apparatus 5, the storage battery 25 is charged.

Further, in the third embodiment, the position information transmission device 6 is provided at the ground side apparatus 2, while the magnetic field detector 7 is provided at the vehicle 3. The position information transmission device 6, in the same way as the first embodiment, is provided with an alternating current power generation circuit 61, an alternating current magnetic field generation circuit 62, and a magnetic shield member 65.

The alternating current magnetic field generation circuit 62 is arranged at the center of the lane over which the vehicle 3 passes and is arranged further to the front than the power reception side resonance circuit 51 in the direction of advance of the vehicle 3. Note that, the alternating current magnetic field generation circuit 62 may be arranged at the same position as the power reception side resonance circuit 51 or further to the front than the power reception side resonance circuit 51 in the front-back direction of the vehicle 3.

The alternating current power generation circuit 61 is electrically connected to the storage battery 25 and the alternating current magnetic field generation circuit 62. The alternating current power generation circuit 61 is electrically connected to the controller 22. The controller 22 controls the alternating current power generation circuit 61. Based on a command from the controller 22, the alternating current power generation circuit 61 converts the direct current power supplied from the storage battery 25 into alternating current power and supplies the alternating current power to the alternating current magnetic field generation circuit 62.

For example, a road side device provided at the front of the ground side apparatus 2 detects a vehicle 3, and when receiving a signal from this road side device, the controller 22 controls the alternating current power generation circuit 61 to generate the alternating current magnetic field for position detection by the alternating current magnetic field generation circuit 62. Note that, the controller 22 may constantly generate a weak alternating current magnetic field by the alternating current magnetic field generation circuit 62 for predetermined hours (for example, hours other than the night) or to the end of each day.

In the same way as the first embodiment, the magnetic shield member 65 is provided at the alternating current magnetic field generation circuit 62 (for example, the top of the alternating current magnetic field generation circuit 62) so as to cover the coil 63 of the alternating current magnetic field generation circuit 62 and blocks the alternating current magnetic field generated from the power transmission side resonance circuit 43. By doing this, it is possible to keep the induced electromotive force due to the alternating current magnetic field for power transfer from flowing to the alternating current power generation circuit 61.

### <Other Embodiments>

Above, preferred embodiments according to the present invention were explained, but the present invention is not limited to these embodiments and can be corrected and changed in various ways within the language of the claims. For example, since the alternating current magnetic field generation circuit 62 for generating an alternating current magnetic field for position detection does not require use of magnetic field resonance coupling, it need not have the capacitor 64.

Further, a filter circuit passing a signal of a frequency of an alternating current magnetic field for position detection and attenuating a signal of a resonance frequency of the power transmission side resonance circuit 43 and the power reception side resonance circuit 51 may be provided between the magnetic field detector 7 and the controller 22 or the ECU 34. In this case, the controller 22 or the ECU 34 acquires the output of the magnetic field detector 7 filtered by this filter circuit.

Further, the vehicle 3 may be a hybrid vehicle (HEV) or plug-in hybrid vehicle (PHEV) provided with an internal combustion engine and a motor as power sources for driving. Further, the vehicle 3 may be an automated driving vehicle in which at least a part of the acceleration, steering, and deceleration (braking) of the vehicle 3 is automatically controlled. Further, the moving object exchanging power with the ground side apparatus 2 may be a commercial vehicle such as a bus or truck, an automated guide vehicle (AGV), drone etc.

Further, in the first embodiment shown in FIG. 1, the position information transmission device 6 may be provided at the ground side apparatus 2, and the magnetic field detector 7 may be provided at the vehicle 3. In this case, the ECU 34 estimates the relative positional relationship between the power transmission side resonance circuit 43 and the power reception side resonance circuit 51 based on the output of the magnetic field detector 7. The estimated relative positional relationship is, for example, provided to a driver through a display device (HMI etc.) of the vehicle 3. By doing this, the driver can decelerate, steer, or otherwise control the vehicle 3 according to need so as to increase the amount of transfer of power. Note that, the vehicle 3 may be automatically controlled so that the amount of transfer of power increases based on the estimated relative positional relationship.

Further, the above-mentioned embodiments can be worked freely combined. For example, in the third embodiment, in the same way as the second embodiment, as the power inflow suppression part, instead of the magnetic shield member 65, the filter circuit 66 may be used. Further, as the power inflow suppression part, the magnetic shield member 65 and the filter circuit 66 may be jointly used.

### REFERENCE SIGNS LIST

1, 1', 1". non-contact power supply system
2. ground side apparatus
3. vehicle
43. power transmission side resonance circuit
6, 6'. position information transmission device
61. alternating current power generation circuit
62. alternating current magnetic field generation circuit
65. magnetic shield member
66. filter circuit

## Claims

1. A position information transmission device (6, 6') provided at one of a ground side apparatus (2) and a moving object (3) performing non-contact power transmission by magnetic field resonance coupling with the ground side apparatus (2), comprising
an alternating current power generation circuit (61) for generating alternating current power;
an alternating current magnetic field generation circuit (62) for generating an alternating current magnetic field as a position signal when the alternating current power is applied; and
a power inflow suppression part (65, 66) for keeping induced electromotive force due to an alternating current magnetic field generated from a power transmission side resonance circuit (43) for the non-contact power transmission from flowing to the alternating current power generation circuit (61).

2. The position information transmission device (6') according to claim 1, wherein the power inflow suppression part (65, 66) is a filter circuit (66) passing the alternating current power and attenuating the induced electromotive force.

3. The position information transmission device (6) according to claim 1 or 2, wherein the power inflow suppression part (65, 66) is a magnetic shield member (65) blocking the alternating current magnetic field generated from the power transmission side resonance circuit (43).

4. The position information transmission device (6, 6') according to any one of claims 1 to 3, wherein the alternating current magnetic field generation circuit (62) is provided at one of the ground side apparatus (2) and the moving object (3), and the power transmission side resonance circuit (43) is provided at the other of the ground side apparatus (2) and the moving object (3).

5. A position information transmission method applied to a non-contact power supply system (1, 1', 1") for performing non-contact power transmission by magnetic field resonance coupling between a ground side apparatus (2) and a moving object (3), including:
generating alternating current power by an alternating current power generation circuit (61);
generating an alternating current magnetic field as a position signal by an alternating current magnetic field generation circuit (62) when the alternating current power is applied; and
keeping induced electromotive force due to an alternating current magnetic field generated from a power transmission side resonance circuit (43) for the non-contact power transmission from flowing to the alternating current power generation circuit (61).

6. A moving object (3) configured so that power is transferred from a ground side apparatus (2) by non-contact, comprising:
a power reception side resonance circuit (51) for receiving power transmitted from a power transmission side resonance circuit (43) provided at the ground side apparatus (2);
an alternating current power generation circuit (61) for generating alternating current power;
an alternating current magnetic field generation circuit (62) for generating an alternating current magnetic field as a position signal when the alternating current power is applied; and
a power inflow suppression part (65, 66) for keeping induced electromotive force due to an alternating current magnetic field generated from the power transmission side resonance circuit (43) from flowing to the alternating current power generation circuit (61).
